# DEMANDE DE BREVET EUROPEEN

(11) **EP 2 113 351 A1**
(43) Date de publication de la demande: **04.11.2009**
(21) Numéro de dépôt: 09158729.5
(22) Date de dépôt: 24.04.2009
(51) Int. Cl.: B27N 3/28, B29B 9/14, B29C 41/00, A61G 17/00

(54) **Procédé de fabrication d'un matériau aggloméré et profilé et cercueil fabriqué avec ce matériau.**

(30) Priorité: 29.04.2008 FR 0852866
(71) Demandeur: Royal, Antoine, 88600 Bruyeres (FR)
(72) Inventeur: Royal, Antoine, 88600 Bruyeres (FR)
(74) Mandataire: Brungard, Yves Francois

(57) **Abrégé**

Un procédé de fabrication d'un matériau aggloméré (7) comportant de la matière synthétique thermoplastique (6) comporte une étape de préparation des granulés dans laquelle on forme la composition en granulés (5) par extrusion d'un mélange de fibre rétifiée (3) sous forme fragmentée avec un liant (4), puis une étape d'extrusion à partir d'au moins une composition en granulés (5), étape au cours de laquelle les granulés sont chauffés et mélangés.

Cercueil (8) et profilé (9) fabriqué à partir de ce matériau.

## Description

L'invention concerne un procédé de fabrication d'un matériau aggloméré à partir de fibre rétifiée. Il concerne également un cercueil fabriqué avec ce matériau et un profilé tel qu'un profilé de menuiserie.

Le bois rétifié est un bois qui a subi un traitement thermique en atmosphère neutre, à une température comprise entre 200 et 280 °C, de telle sorte que les hémicelluloses du bois sont transformées et la lignine est réticulée, sans modifier la cellulose. Le document FR2512053 décrit un procédé d'obtention d'une telle matière qui a des propriétés intéressantes, notamment d'imputrescibilité. Ce même traitement est également applicable à d'autres matières végétales de manière à obtenir de la fibre rétifiée, par exemple à partir de paille, d'enveloppe de lin, de chanvre, d'écorce de bois.

On connaît de manière classique un procédé de fabrication d'objets en matière thermoplastique par extrusion, selon lequel on introduit la matière thermoplastique dans une extrudeuse à vis sans fin, on chauffe la matière et on la met en pression. Ensuite, on fait passer la matière dans une filière de manière à obtenir un profilé continu. Dans un procédé d'injection, on injecte la matière sous pression dans un moule qui contient en creux la forme de la pièce à obtenir.

Il a été proposé dans le document FR2609927 de fabriquer un matériau aggloméré en mélangeant une charge de bois rétifié et d'un polymère ou d'une résine. Pour cela, il est proposé d'utiliser un réacteur comportant une vis sans fin dans lequel une matière ligneuse telle que du bois est introduite, monté en température, puis transférée dans une zone où elle est mélangée avec une résine, et finalement extrudée ou injectée de la même manière que décrite précédemment.

Le contrôle d'un tel appareillage est très délicat car, une fois la matière introduite, il n'est possible de contrôler que la température dans le réacteur et la vitesse de rotation de la vis. Il n'est pas possible de faire varier indépendamment le temps de séjour pour le traitement thermique, le broyage qui suit et la vitesse d'extrusion.

Par ailleurs, du bois rétifié puis broyé peut se présenter sous une forme au moins partiellement pulvérulente. L'introduction de cette matière dans une machine d'extrusion ou d'injection ne permet pas de contrôler précisément la quantité de charge introduite dans une extrudeuse. De plus, l'introduction de cette matière dans une extrudeuse à tendance à générer des nuages de poussière, et il faut des précautions particulières, telle que des installations d'aspiration, pour circonvenir ces désagréments.

Le document US 6 280 667 montre également un profilé de menuiserie obtenu dans un matériau comportant une matière thermoplastique avec une charge de fibres végétales. La charge est par exemple de la fibre de bois, sous forme de sciure. Le profilé comporte une peau extérieure obtenue par coextrusion afin de maîtriser l'aspect extérieur et la durabilité du profilé. Le procédé de coextrusion complique le procédé de fabrication.

L'invention vise à fournir un procédé de fabrication d'un matériau aggloméré avec une charge de fibre rétifiée qui puisse être mis en oeuvre facilement en contrôlant les paramètres de fabrication de manière indépendante et en limitant les désagréments de la mise en oeuvre. Elle vise également à fournir des objets réalisés en ce matériau.

Avec ces objectifs en vue, l'invention a pour objet un procédé de fabrication d'un matériau aggloméré comportant de la matière synthétique thermoplastique, le procédé comportant une étape d'extrusion à partir d'au moins une composition en granulés, étape au cours de laquelle les granulés sont chauffés et mélangés, **caractérisé en ce qu**'il comporte, avant l'étape d'extrusion, une étape de préparation des granulés dans laquelle on forme la composition en granulés par extrusion d'un mélange de fibre rétifiée sous forme fragmentée avec un liant.

Ainsi, selon le procédé, le matériau aggloméré n'est pas réalisé en une seule étape, mais dans des étapes indépendantes, ce qui permet de maîtriser les paramètres de fabrication à chaque étape. De plus, l'étape de préparation peut être menée sur une installation équipée pour se prémunir des désagréments de l'utilisation du bois rétifié sous une forme fragmentée. On obtient alors une composition en granulés qui sert de base pour l'étape suivante.

De manière particulière, dans l'étape d'extrusion, on ajoute une matière complémentaire thermoplastique. La matière complémentaire thermoplastique est ajoutée dans des proportions qui sont choisies en fonction des propriétés finales à obtenir.

Le liant est choisi par exemple parmi les matières suivantes : du polyéthylène, du polypropylène, de la paraffine, de la cire de polyéthylène. La composition en granulés peut ensuite être mélangée avec les mêmes matières que le liant, mais également d'autres types de matières compatibles avec le liant. Ainsi, lorsque le liant est du polyéthylène, on peut pratiquement utiliser toute sorte de matière complémentaire thermoplastique par la suite. La paraffine est de préférence à l'état solide à température ambiante. Par ailleurs, ces matières pour le liant peuvent être brûlées sans dégagement de produits toxiques. La valorisation sous forme thermique en fin de vie des objets fabriqués avec cette matière ne pose pas de problèmes environnementaux particuliers.

De préférence, les granulés issus de l'étape de préparation contiennent jusqu'à 90% en poids de fibre rétifiée. En réalisant la composition en granulés avec un fort taux de charge, on peut obtenir ensuite un objet avec une charge de fibre rétifiée quelconque par l'ajout de la matière complémentaire thermoplastique à la composition en granulés. Cet ajout de matière complémentaire thermoplastique fait diminuer le taux de charge en fibre rétifiée dans la composition finale. En partant d'une composition avec une charge très élevée, on peut choisir le taux final sur une grande plage. Cependant, on constate qu'un taux minimal de liant est nécessaire pour obtenir la cohérence de la composition en granulés, de l'ordre de 10%.

Selon une caractéristique particulière, l'étape d'extrusion comporte la formation d'un profilé à travers une filière.

Selon une autre caractéristique particulière, l'étape d'extrusion comporte la formation d'une deuxième composition en granulés.

La deuxième composition en granulés peut être utilisée par exemple dans une étape supplémentaire de rotomoulage. Dans un tel procédé, un moule comporte une cavité dans laquelle la deuxième composition en granulés est introduite. Les parois de la cavité sont chauffées et les granulés sont agités dans la cavité, de telle sorte toutes les parois sont atteintes par des granulés. Ceux-ci fondent et s'agglomèrent sur les parois de manière à former une coque. Après refroidissement et ouverture du moule, on obtient une coque présentant un creux.

De préférence, la deuxième composition en granulés est micronisée avant le rotomoulage. La micronisation consiste à broyer la composition pour en faire des particules de taille inférieure à 0,5 mm. La répartition de la matière dans le moule ainsi que l'agglomération des particules entre elles en est améliorée.

L'invention a aussi pour objet un cercueil en matière synthétique, la matière synthétique étant un aggloméré de fibre rétifiée et d'une polyoléfine. Une telle matière présente un caractère hydrophobe qui est intéressant dans une telle application. De plus, dans le cas d'une incinération, la combustion de la matière synthétique ne dégage pas de matière polluante. De plus, cette combustion, de par la nature de la charge, apporte une part importante de l'énergie utile à la crémation. Dans le cas d'un cercueil destiné à l'enfouissement, on prévoit que la matière synthétique soit biodégradable.

De manière particulière, le cercueil est obtenu par le procédé de rotomoulage tel que décrit précédemment, le cercueil comportant une caisse et un couvercle obtenus en divisant en deux une coque creuse obtenue par l'opération de rotomoulage.

La polyoléfine est par exemple issue de la biomasse. Le bilan carbone de la vie du cercueil est alors très avantageux avec un solde d'émission de gaz carbonique très faible. On a constaté également de manière surprenante que l'enrobage des fibres était meilleur avec une polyoléfine issue de la biomasse en comparaison avec une polyoléfine de synthèse à partir du pétrole. Une telle polyoléfine est fabriquée par exemple à partir de maïs ou d'éthanol issu de la fermentation et la distillation de matière végétale.

L'invention a aussi pour objet un profilé de menuiserie en matière synthétique, dans lequel la matière synthétique est un aggloméré de fibre rétifiée et d'une matière synthétique thermoplastique. Le profilé est obtenu par exemple par le procédé tel que décrit précédemment, mais pas nécessairement. Un tel profilé a une plus grande rigidité qu'un profilé tel qu'en PVC. De ce fait, il n'est pas nécessaire d'y inclure un renfort. A la fin de vie du profilé, le recyclage d'un tel profilé est facilité car il n'inclut pas de matériau hétérogène. Par ailleurs, il peut être simplement brûlé, sans risque pour l'environnement.

La polyoléfine est par exemple issue de la biomasse.

L'invention sera mieux comprise et d'autres particularités et avantages apparaîtront à la lecture de la description qui va suivre, la description faisant référence aux dessins annexés parmi lesquels :
- la figure 1 est une vue schématique d'un procédé conforme à l'invention ;
- la figure 2 est une vue en perspective d'un cercueil conforme à l'invention ;
- la figure 3 est une vue en coupe d'un profilé de menuiserie conforme à l'invention.

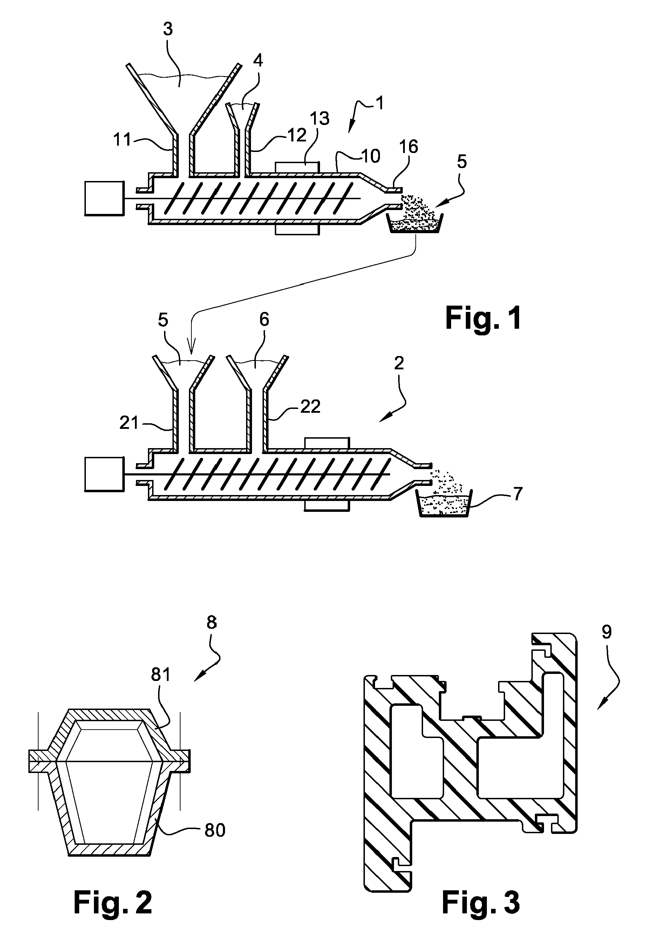

Le procédé selon l'invention peut être mis en oeuvre à l'aide de deux extrudeuses, tel que représenté sur la figure 1. La première extrudeuse 1 comporte classiquement un corps 10 tubulaire, une vis 15 sans fin monté rotative dans le corps 10, une première entrée 11 pour introduire une première matière 3 dans le corps, et une sortie 16 à l'extrémité opposée à l'entrée 11 pour extraire la matière mélangée, chauffée et en pression. L'extrudeuse 1 comporte en outre une deuxième entrée 12 pour introduire une deuxième matière 4 afin de la mélanger à la première matière. Les deux entrées 11, 12 ont été représentées décalées par souci de clarté du schéma, mais elles peuvent être au même niveau du corps. Le mélange peut même être effectué avant l'entrée. Le corps 10 comporte des moyens de chauffage 13 afin de faire fondre la matière au cours de son passage dans l'extrudeuse.

La deuxième extrudeuse 2 est conçue de la même manière que la première.

Lors d'une étape de préparation, la première entrée 11 de la première extrudeuse 1 reçoit du bois rétifié 3 sous forme fragmentée. Les morceaux de bois rétifié peuvent aller jusqu'à 1 à 2 cm, mais peuvent aussi être sous forme pulvérulente, avec un mélange de morceaux de taille intermédiaire. Ce bois rétifié 3 est obtenu par exemple en traitant par chauffage sous atmosphère neutre de la sciure de bois. Il peut être aussi obtenu par le broyage de morceaux de bois rétifié de plus grandes dimensions, par exemple de longueur de quelques centimètres. La deuxième entrée 12 reçoit un liant 4. Le liant 4 est par exemple un polyéthylène sous forme de granulés de taille de 2 à 15 mm. Ce peut être aussi de la paraffine également sous forme de granulés.

Les deux matières 3, 4 sont chauffées et mélangées par la vis 15 dans la première extrudeuse 1. La température atteinte est de l'ordre de 160 à 190°C. Les gros morceaux de bois rétifié sont broyés. La composition 5 ainsi obtenue est extrudée à la sortie dans une filière afin de former des filaments qui sont régulièrement coupés par un couteau afin de former des granulés. On obtient ainsi une composition en granulés 5 ayant un taux de charge en bois rétifié jusqu'à 90%.

Cette composition en granulés 5 est introduite, dans une étape d'extrusion, dans la deuxième extrudeuse 2 par la première entrée 21. La deuxième entrée 22 reçoit une matière thermoplastique 6 telle qu'une polyoléfine (polyéthylène ou polypropylène). Un agent compatibilisant est éventuellement ajouté à l'une des matières. Un tel agent est par exemple connu sous la dénomination PRIEX GP 12 de Solvay Plastics. Les deux matières sont mélangées dans l'extrudeuse afin de former le matériau aggloméré 7, puis le matériau aggloméré est soit formé en granulés comme à l'étape de préparation, comme représenté sur la figure 1, soit injecté dans un moule pour former une pièce moulée.

Des échantillons ont été réalisés par injection. Les réglages d'injection étaient les suivants : la température de réglage de la presse était de 165 à 205°C, la pression d'injection était de 100 bar, la pression de maintien était de 70 bar, le temps de refroidissement a été de 20 secondes. Le moule n'était pas régulé. Les éprouvettes ont été étuvées pendant 1 heure à 80 °C. Des essais de traction montrent les résultats suivants :

| Formulation | Contrainte à la rupture (MPa) | Module E (MPa) |
|---|---|---|
| Polypropylène + 20% bois rétifié | 20,2 | 1266 |
| Polypropylène + 40% bois rétifié | 24,8 | 1991 |
| Polypropylène + 60% bois rétifié | 30,4 | 2922 |

La figure 2 montre un exemple de pièce réalisée avec une telle matière 7 en granulés. Cette pièce est un cercueil destiné à l'incinération. Les granulés issus de l'étape d'extrusion sont introduits dans un moule de rotomoulage, comme décrit précédemment. Une coque ayant la forme du cercueil 8 fermé est formée. Après la solidification de la coque, une découpe de la coque est effectuée pour la séparer en une caisse 80 et un couvercle 81. Dans ce mode de réalisation, la matière est préférentiellement réalisée à partir de polyéthylène. Le couvercle pourra être maintenu fermé par des vis, symbolisées par des traits mixtes, réalisées par injection de la même matière.

La figure 3 montre un exemple de profilé 9 de menuiserie réalisé par extrusion à la sortie de la deuxième extrudeuse. Il pourrait être obtenu directement à la sortie de la première extrudeuse. Un tel profilé 9 est destiné à fabriquer le cadre d'un vantail de fenêtre. Par rapport à un matériau à base de bois, il a l'avantage d'être hydrophobe, ce qui le rend particulièrement adapté à une utilisation dans une menuiserie extérieure. Un autre avantage est sa possibilité de recyclage par valorisation thermique en fin de vie. De plus, en utilisant un thermoplastique à base de polyoléfine, on évite les dégagements gazeux toxiques que l'on peut rencontrer lors d'un incendie avec les menuiseries en PVC.

Des expériences ont aussi été conduites en utilisant une matière rétifiée à partir de paille, d'écorce de bois ou de chènevotte. Elles ont montré des résultats aussi intéressants qu'avec du bois rétifié. On pourrait aussi envisager l'utilisation d'autres matériaux végétaux, tels que des écorces de noix, d'arachide, de la fibre de chanvre ou de lin...

L'invention n'est pas limitée au mode de réalisation qui vient d'être décrit uniquement à titre d'exemple. Le bois rétifié peut être remplacé par une autre fibre végétale ayant subi le même traitement thermique de rétification.

## Revendications

1. Cercueil en matière synthétique, **caractérisé en ce que** la matière synthétique est un aggloméré de fibre rétifiée et d'une polyoléfine.

2. Cercueil selon la revendication 1, **caractérisé en ce qu'**il est obtenu par rotomoulage, le cercueil (8) comportant une caisse (80) et un couvercle (81) obtenus en divisant en deux un corps creux obtenu par l'opération de rotomoulage.

3. Cercueil selon la revendication 1, **caractérisé en ce que** la polyoléfine est issue de la biomasse.

4. Cercueil selon la revendication 1, dans lequel la fibre rétifiée et du bois rétifié.

5. Profilé de menuiserie en matière synthétique, **caractérisé en ce que** la matière synthétique est un aggloméré (7) de fibre rétifiée et d'une matière synthétique thermoplastique (6).

6. Profilé de menuiserie selon la revendication 5, **caractérisé en ce que** la polyoléfine est issue de la biomasse.

7. Profilé de menuiserie selon la revendication 5, dans lequel la fibre rétifiée et du bois rétifié.

8. Procédé de fabrication d'un matériau aggloméré (7) comportant de la matière synthétique thermoplastique (6), le procédé comportant une étape d'extrusion à partir d'au moins une composition en granulés (5), étape au cours de laquelle les granulés sont chauffés et mélangés, **caractérisé en ce qu'**il comporte, avant l'étape d'extrusion, une étape de préparation des granulés dans laquelle on forme la composition en granulés (5) par extrusion d'un mélange de fibre rétifiée (3) sous forme fragmentée avec un liant (4).

9. Procédé selon la revendication 8, selon lequel dans l'étape d'extrusion, on ajoute une matière complémentaire thermoplastique (6).

10. Procédé selon la revendication 8, selon lequel le liant (4) est choisi parmi les matières suivantes : du polyéthylène, du polypropylène, de la paraffine.

11. Procédé selon la revendication 8, selon lequel la composition en granulés (5) issus de l'étape de préparation contiennent jusqu'à 90% en poids de fibre rétifiée.

12. Procédé selon la revendication 8, selon lequel l'étape d'extrusion comporte la formation d'un profilé à travers une filière.

13. Procédé selon la revendication 8, selon lequel l'étape d'extrusion comporte la formation d'une deuxième composition en granulés (7).

14. Procédé selon la revendication 13, **caractérisé en ce qu'**il comporte une étape supplémentaire de rotomoulage en utilisant la deuxième composition en granulés (7).

15. Procédé selon la revendication 14, dans lequel la deuxième composition en granulés est micronisé avant le rotomoulage.
